# EUROPÄISCHE PATENTSCHRIFT

(11) **EP 1 675 466 B1**
(45) Veröffentlichungstag und Bekanntmachung des Hinweises auf die Patenterteilung: **03.07.2013**
(21) Anmeldenummer: 04765172.4
(22) Anmeldetag: 14.09.2004
(51) Int. Cl.: A01N 63/04, A01N 61/00, A01N 37/36

(54) **VERFAHREN ZUR HERSTELLUNG VON PFLANZENSCHUTZ- ODER PFLANZENSTÄRKUNGSMITTEL ZUR BEKÄMPFUNG VON BAKTERIELLEN UND/ODER PILZÄLICHEN PFLANZENERKRANKUNGEN, INSBESONDERE VON FEUERBRAND**
METHOD FOR PRODUCING PLANT PROTECTION OR PLANT-STRENGTHENING AGENT FOR FIGHTING AGAINST BACTERIAL AND/OR FUNGAL PLANT DISEASES, IN PARTICULAR AGAINST FIRE BLIGHT
PROCEDE DE PRODUCTION D'UN AGENT PROTECTEUR OU FORTIFIANT PHYTOSANITAIRE POUR LA LUTTE CONTRE DES MALADIES DES PLANTES DUES A DES BACTERIES ET/OU DES CHAMPIGNONS, EN PARTICULIER CONTRE LE FEU BACTERIEN

(30) Priorität: 21.10.2003 DE 10349413
(43) Veröffentlichungstag der Anmeldung: 05.07.2006
(73) Patentinhaber: bio-ferm Research GmbH, 78467 Konstanz (DE)
(72) Erfinder: KUNZ, Stefan, 78315 Radolfzell (DE)
(74) Vertreter: Weiss, Peter
(86) Internationale Anmeldenummer: PCT/EP2004/010258
(87) Internationale Veröffentlichungsnummer: WO 2005/048717

(56) Entgegenhaltungen:
- EP-A- 0 387 640
- EP-A- 0 414 404
- DATABASE WPI Section Ch, Week 199441 Derwent Publications Ltd., London, GB; Class C04, AN 1994-329870 XP002312090 & JP 06 256125 A (EIZAI SEIKA KEN KK) 13. September 1994 (1994-09-13)
- DATABASE WPI Section Ch, Week 199723 Derwent Publications Ltd., London, GB; Class C05, AN 1997-255405 XP002312091 & JP 09 087122 A (HOKKAIDO GREEN KOSAN KK) 31. März 1997 (1997-03-31)
- DATABASE BIOSIS [Online] BIOSCIENCES INFORMATION SERVICE, PHILADELPHIA, PA, US; März 2003 (2003-03), QIN GUO ZHENG ET AL: "Enhancement of biocontrol efficacy of antagonistic yeasts by salicylic acid in sweet cherry fruit." XP002312086 Database accession no. PREV200300490170 & PHYSIOLOGICAL AND MOLECULAR PLANT PATHOLOGY, Bd. 62, Nr. 3, März 2003 (2003-03), Seiten 147-154, ISSN: 0885-5765
- DATABASE BIOSIS [Online] BIOSCIENCES INFORMATION SERVICE, PHILADELPHIA, PA, US; Juni 2003 (2003-06), BAAKZA AREFA ET AL: "Effect of organic acids and sugars on growth and siderophore production of fungi" XP002312087 Database accession no. PREV200400373161 & BRI'S JOURNAL OF ADVANCES IN SCIENCE AND TECHNOLOGY, Bd. 6, Nr. 1-2, Juni 2003 (2003-06), Seiten 1-8, ISSN: 0971-9563
- A.SEIBOLD ET AL.: "Hefen als Antagonisten gegen Feuerbrand" ARBEITSKREIS PHYTOBAKTERIOLOGIE - TAGUNG 2003, [Online] 11. September 2003 (2003-09-11), XP002312085 DRESDEN-PILLNITZ, DE Gefunden im Internet: URL:http://www.phytomedizin.org/ak/11/tagu ng2003.htm#22> [gefunden am 2004-12-28]
- DATABASE CROPU [Online] A.KOWALEWSKI ET AL.: "Experiments on the control of fire blight (Erwinia amylovora) with plant treatment preparations" XP002312088 gefunden im STN-INTERNATIONAL Database accession no. 1998-80918 & MITT.BIOL.BUNDESANS.LANDFORTWIRTSCH., Nr. 321, 1996, Seite 424,
- DATABASE CHEMABS [Online] CHEMICAL ABSTRACTS SERVICE, COLUMBUS, OHIO, US; D.C. SANDS ET AL.: "Citrate and tartrate sprays for reduction of Erwinia amylovora and Pseudomonas syringiae" XP002312089 gefunden im STN-INTERNATIONAL Database accession no. 88:1714 CA

## Beschreibung

Derartige Verfahren zur Herstellung von Pflanzenschutz-oder Pflanzenstärkungsmittel zur Bekämpfung von bakteriellen Pflanzenerkrankungen, insbesondere zur Bekämpfung von Feuerbrand sind in vielfältiger Form und Ausführung bekannt.

Bekannt ist bspw., däss antagonistische Mikroorganismen immer häufiger eingesetzt werden Neben Bakterien, wie bspw. Bacillus thuringiensis, die als Insektizide verwendet werden, oder Bacillus subtilis, die in Bodenbehandlüngsmitteln und Beizmitteln verwendet werden, gibt es auch Präparate, die Pilzsporen und Hefezellen enthalten.

Bekannt ist bspw. das Pflanzenschutzmittel Contans, welches Sporen von Coniothyrium minitans enthält oder verschiedene Präparate mit dem der Hefe Trichoderma harzianum. Diese Präparate werden im wesentlichen auf den Boden appliziert oder mit in die Erde oder Gartenerde eingemischt. Diese Mittel sind nicht zur Blütenapplikation geeignet.

Nachteilig ist, dass der Feuerbrand des Kernobstes durch das Bakterium Erwina amylovora verursacht wird. Die Bekämpfung erfolgt bspw. durch kulturtechnische und sanitäre Massnahmen, bspw. durch Rodung bspw. Reduktion des Inokulums. Eine weitere Bekämpfung des Feuerbrandes erfolgt durch Pflanzenschutzmittel. Antibiotikabehandlungen während der Blüte werden häufig verwendet. Dabei wird der Wirkstoff Streptomycin mit anerkannter Wirkung verwendet. Seit neustem wurde jedoch dieses Pflanzenschutzmittel verboten, bzw. es soll EU-weit verboten werden. Der im Pflanzenschutzmittel Plantomycin, enthaltene Wirkstoff Streptomycin wird in den Vereinigten Staaten seit den 70er Jahren erfolgreich angewendet, jedoch treten zunehmend Probleme mit resistenten Erregern auf, was unerwünscht ist.

Ferner sind Kupferbehandlungen während der Blüte, durch bspw. Funguran, Cuprozin bekannt, können aber aufgrund phytotxischer Wirkungen bei Tafelobst nicht durchgeführt werden. Zudem lief die Zulassung dieses Mittels bereits im Dezember 2002 aus.

Zudem wurden Versuche unternommen, antagonistische Mikroorganismen in Obstbaumblüten zu applizieren und hierdurch das Wachstum von Erreger zu hemmen und somit die Infektion zu verhindern. Dabei wurden verschiedene Bakterien, wie Pseudomonas flourescens, Pantoea agglomerans, Bacillus subtilis, Rhanella aquatilis eingesetzt. Teilweise wurden verkaufsfähige Präparate hieraus entwickelt, wie bspw. die Präparate Blight ban und Serenade in den USA sowie BIOPRO in Deutschland. Die Wirkungen dieser Präparate sind bisher sehr umstritten und der Einsatz ist äusserst begrenzt.

Aus der DataBase CROPU ist eine Veröffentlichung von A. Kowalewski et. al. XP-002312088 offenbart, die eine Verwendung von Zitronensäure zur Bekämpfung von Feuerbrand beschreibt.

Die Veröffentlichung von A. Seibold et. al. XP-002312085 offenbart eine Verwendung von unterschiedlichen Gattungen von Hefen der Gattung Metschnikowa pucherrima und Aureobasidium pullans.

Aus der DataBase Chemabs ist die Dokumentation von Sands et. al. XP-002312089 beschrieben, die eine Verwendung von Zitronensäure bei der Bekämpfung von Feuerbrand (Erwinia amylovora) an Birnen oder Pseudomanas syringae an Bohnen aufzeigt. Dabei wird ein niedriger pH-Wert verwendet. Dadurch ist die Schädigung der Pflanzen zu befürchten. Über den pH-Wert werden lediglich Bakterien bekämpft.

Aus der DataBase WPI Section CH, Week 199723 Derwent Publications Ltd. London, XP-002312091 und JP 09087122 A ist eine Bekämpfung von Bakterien lediglich mit verdünnten Säuren beschrieben.

Die EP 0 387 640 A1 offenbar eine Verwendung eines Pflanzenschutzmittels zur Bekämpfung von Pilzerkrankungen.

Ferner sind Publikationen aus der DataBase WPI Section CH Week 199441, Publications Ltd. London, XP-002312090 sowie aus der DataBase Biosis, XP-002312086 und XP-002312087 beschrieben, die lediglich Studien oder Behandlungen von pilzlichen Erkrankungen aufzeigen und offenbaren, wie eine Säure auf Pilze wirkt. Dabei werden Säuren als Resistenzinduktoren verwendet, die gegen pilzliche Erreger eingesetzt werden.

Der vorliegenden Erfindung liegt daher die Aufgabe zugrunde, ein Verfahren zur Herstellung von Pflanzenstärkungs- oder Pflanzenschutzmitteln zur Bekämpfung von bakteriellen Pflanzenerkrankungen, insbesondere Feuerbrand, und ein Verfahren zur Anwendung des Pflanzenstärkungs- oder Pflanzenschutzmittels zu schaffen, welche die genannten Nachteile beseitigen, und welche sehr wirkungsvoll an einer Vielzahl von Pflanzen, insbesondere im Obstbau eingesetzt werden können. Dabei soll das Pflanzenstärkungs- oder Pflanzenschutzmittel sprühbar auf die erkrankten Pflanzen aufgebracht werden können.

Zur Lösung dieser Aufgabe führen die Merkmale des Kennzeichens des Patentanspruches 1 sowie die Merkmale der nebengeordneten Patentansprüche.

Mit der vorliegenden Erfindung wird ein Pflanzenschutzoder Pflanzenstärkungsmittel geschaffen, in dem vermehrungsfähige pilzliche Strukturen, vorzugsweise Hefezellen und/oder Pilzsporen in eine saure Applikation, im Bereich eines pH-Wertes von 3,6 bis 4,0 eingegeben bzw. zugegeben werden.

Ein Präparat, das zur Behandlung von Pflanzen in Wasser resuspendiert wird, besteht aus Molkepulver, Dinatriumhydrogenphospat, Zitronensäure sowie Blastosporen des Stammes CF10 der Art Aureobasidium pullulans und Hefezellen des Stammes MSK1 der Art Metschnikowia pulcherrima. Dieses Präparat ist besonders geeignet um Feuerbrand zu bekämpfen.

Die Wirksamkeit des neuen Pflanzenschutz- oder Pflanzenstärkungsmittels hat das Antibiotikum Plantomycin sogar übertroffen.

Dabei können vermehrungsfähige pilzliche Strukturen wie Sporen, Konidien und knospende Hefezellen von filamentösen Pilzen und Hefepilzen verwendet werden, die in der Spritzbrühe im Bereich des pH-Wertes von 3,6 bis 4,0 zugegeben werden. Es hat sich als besonders vorteilhaft bei der vorliegenden Erfindung gezeigt, dass der Einsatz von Pilzsporen oder Hefezellen in Mischung mit Säure, organischer oder anorganischer Art, im Bereich des pH-Wertes von 3,6 bis 4,0 zu einer gezielten Wirkungssteigerung bei der Feuerbrandbekämpfung führt. Insbesondere das Zugeben der Pilzsporen oder Hefesporen in eine saure sprühfähige Umgebung bzw. Spritzbrühe im Bereich des pH-Wertes von 3,6 bis 4,0 führt zu einem erhöhtem Wirkungsgrad bei der Bekämpfung von bakteriellen und/oder pilzlichen Pflanzenerkrankungen. Auf diese Weise lassen sich sehr kostengünstig und effizient die Erreger des Feuerbrandes bekämpfen.

## Patentansprüche

1. Verfahren zur Herstellung von Pflanzenschutz- oder Pflanzenstärkungsmittel zur Bekämpfung von bakteriellen Pflanzenerkrankungen, insbesondere von Feuerbrand,
**dadurch gekennzeichnet,**
**dass** vermehrungsfähige pilzliche Strukturen einer sauren Umgebung zur Behandlung der Pflanzen zugegeben werden und der Umgebung Dinatriumhydrogenphosphat oder Natriumhydrogencarbonat zugegeben wird, damit ein pH-Wert im Bereich von 3,6 bis 4,0 gehalten wird.

2. Verfahren nach Anspruch 1, **dadurch gekennzeichnet, dass** als pilzliche Strukturen vermehrungsfähige Hefezellen und/oder Pilzsporen zugegeben werden.

3. Verfahren nach wenigstens einem der Ansprüche 1 oder 2, **dadurch gekennzeichnet, dass** Blastosporen der Art Aureobasisium pullulans zugegeben werden.

4. Verfahren nach wenigstens einem der Ansprüche 1 bis 3, **dadurch gekennzeichnet, dass** Hefezellen der Art Metschnikowia pulcherrima zugegeben werden.

5. Verfahren nach wenigstens einem der Ansprüche 1 bis 4, **dadurch gekennzeichnet, dass** als Säuerungsmittel Zitronensäure zugegeben wird.

6. Verfahren nach wenigstens einem der Ansprüche 1 bis 5, **dadurch gekennzeichnet, dass** der Umgebung Molkepulver zugegeben wird.

7. Verfahren nach wenigstens einem der Ansprüche 1 bis 6, **dadurch gekennzeichnet, dass** Blastosporen oder Hefezellen, sowie Zitronensäure und Molkepulver zugegeben werden.

8. Verfahren nach wenigstens einem der Ansprüche 1 bis 7, **dadurch gekennzeichnet, dass** als vermehrungsfähige pilzliche Strukturen, Sporen, Konidien und knospende Hefezellen von filamentösen Pilzen und Hefepilzen verwendet werden.

9. Pflanzenschutz- oder Pflanzenstärkungsmittel zur Bekämpfung von bakteriellen Pflanzenerkrankungen, insbesondere Feuerbrand, **dadurch gekennzeichnet, dass** das Präparat eine saure Umgebung und vermehrungsfähige pilzliche Strukturen enthält und der Umgebung Dinatriumhydrogenphosphat oder Natriumhydrogencarbonat zugegeben wird, damit ein pH-Wert im Bereich von 3 bis 4,0 gehalten wird.

10. Pflanzenschutz- oder Pflanzenstärkungsmittel zur Bekämpfung von bakteriellen Pflanzenerkrankungen, insbesondere Feuerbrand, **dadurch gekennzeichnet, dass** 1 kg Präparat enthält:
ca. 2x10¹¹ bis 1x10¹³, insbesondere 2x10¹² Blastosporen der Art Aureobasisium pullulans
ca. 2x10¹¹, bis 1x10¹³, insbesondere 3x10¹² Hefezellen der Art Metschnikowia pulcherrima
100 g bis 400 g, insbesondere 300 g Zitronensäure 50 g bis 250 g, insbesondere 150 g Dinatriumhydrogenphosphat
100 g bis 500 g, insbesondere 400 g Molkepulver.

11. Verwendung von Pflanzenschutz- oder Pflanzenstärkungsmittel zur Bekämpfung von bakteriellen Pflanzenerkrankungen, insbesondere Feuerbrand, die vermehrungsfähige pilzliche Strukturen in einer sauren sauren Umgebung enthalten und deren Umgebung Dinatriumhydrogenphosphat oder Natriumhydrogencarbonat zugegeben wird, damit ein pH-Wert im Bereich von 3,6 bis 4,0 gehalten wird.

12. Verwendung nach Anspruch 11, **dadurch gekennzeichnet, dass** als pilzliche vermehrungsfähige Strukturen Blastosporen der Art Aureobasisium pullulans und/oder Hefezellen der Art Metschnikowia pulcherrima verwendet werden.

13. Verwendung nach Anspruch 11 oder 12, **dadurch gekennzeichnet, dass** Säuerungsmittel organischer oder anorganischer Art, insbesondere Zitronensäure verwendet werden.

14. Verwendung nach wenigstens einem der Ansprüche 11 bis 13 zum Bekämpfen von Feuerbrand (Erwinia amylovora) durch Besprühen von Blüten von Pflanzen mit einer Mischung von vermehrungsfähigen pilzlichen Strukturen und Säuren, deren Spritzbrühe im pH-Wertbereich von 3,6 bis 4,0 liegt.

15. Verwendung nach wenigstens einem der Ansprüche 11 bis 14, **dadurch gekennzeichnet, dass** ein Bekämpfen von Feuerbrand (Erwinia amylovora) durch Besprühen von Blüten von Pflanzen mit Blastosporen, der Art Aureobasisium pullulans und/oder Hefezellen der Art Metschnikowia pulcherrima in Mischung mit Säuren erfolgt, wobei die Mischung bzw. die Spritzbrühe bei einem pH-Wert im Bereich von 3,6 bis 4,0 gehalten wird.

16. Verwendung nach wenigstens einem Ansprüche 11 bis 15, **dadurch gekennzeichnet, dass** zur Bekämpfung von Feuerbrand (Erwinia amylovora) Blüten von Pflanzen mit Blastosporen der Arten Aureobasisium pullulans und/oder Hefezellen der Art Metschnikowia pulcherrima in Mischung mit organischen Säuren bespritzt werden, deren pH-Wert im Bereich von 3,6 bis 4,0 liegt.

## Claims

1. A method for the preparation of plant protection or plant strengthening agents for controlling bacterial plant diseases, in particular fire blight,
**characterised in that**
that fungal structures which are capable of multiplication are added to an acidic environment for treatment of the plants, and disodium hydrogen phosphate or sodium hydrogen carbonate is added to the environment, so that a pH value in the range of 3.6 to 4.0 is maintained.

2. A method according to Claim 1, **characterised in that** yeast cells and/or fungal spores which are capable of multiplication are added as fungal structures.

3. A method according to at least one of Claims 1 or 2, **characterised in that** blastospores of the type Aureobasisium pullulans are added.

4. A method according to at least one of Claims 1 to 3, **characterised in that** yeast cells of the type Metschnikowia pulcherrima are added.

5. A method according to at least one of Claims 1 to 4, **characterised in that** citric acid is added as acidifying agent.

6. A method according to at least one of Claims 1 to 5, **characterised in that** whey powder is added to the environment.

7. A method according to at least one of Claims 1 to 6, **characterised in that** blastospores or yeast cells, and also citric acid and whey powder are added.

8. A method according to at least one of Claims 1 to 7, **characterised in that** spores, conidia and budding yeast cells of filamentous fungi and yeast fungi are used as fungal structures which are capable of multiplication.

9. A plant protection or plant strengthening agent for controlling bacterial plant diseases, in particular fire blight, **characterised in that** the preparation contains an acidic environment and fungal structures which are capable of multiplication, and disodium hydrogen phosphate or sodium hydrogen carbonate is added to the environment, so that a pH value in the range of 3 to 4.0 is maintained.

10. A plant protection or plant strengthening agent for controlling bacterial plant diseases, in particular fire blight, **characterised in that** 1 kg of preparation contains:
approx. 2x10¹¹ to 1x10¹³, in particular 2x10¹², blastospores of the type Aureobasisium pullulans
approx. 2x10¹¹ to 1x10¹³, in particular 3x10¹², yeast cells of the type Metschnikowia pulcherrima
100 g to 400 g, in particular 300 g, citric acid
50 g to 250 g, in particular 150 g, disodium hydrogen phosphate
100 g to 500 g, in particular 400 g, whey powder.

11. Use of plant protection or plant strengthening agent for controlling bacterial plant diseases, in particular fire blight, which contain fungal structures which are capable of multiplication in an acidic environment and to the environment of which disodium hydrogen phosphate or sodium hydrogen carbonate is added, so that a pH value in the range of 3.6 to 4.0 is maintained.

12. Use according to Claim 11, **characterised in that** blastospores of the type Aureobasisium pullulans and/or yeast cells of the type Metschnikowia pulcherrima are used as fungal structures which are capable of multiplication.

13. Use according to Claim 11 or 12, **characterised in that** acidifying agents of organic or inorganic type, in particular citric acid, are used.

14. Use according to at least one of Claims 11 to 13 for controlling fire blight (Erwinia amylovora) by spraying blossoms of plants with a mixture of fungal structures which are capable of multiplication and acids, the spray mixture of which lies in the pH-value range of 3.6 to 4.0.

15. Use according to at least one of Claims 11 to 14, **characterised in that** control of fire blight (Erwinia amylovora) takes place by spraying blossoms of plants with blastospores, of the type Aureobasisium pullulans and/or yeast cells of the type Metschnikowia pulcherrima in a mixture with acids, the mixture or the spray mixture being kept at a pH value in the range of 3.6 to 4.0.

16. Use according to at least one of Claims 11 to 15, **characterised in that** for controlling fire blight (Erwinia amylovora) blossoms of plants are sprayed with blastospores of the typ Aureobasisium pullulans and/or yeast cells of the type Metschnikowia pulcherrima in a mixture with organic acids, the pH value of which lies in the range of 3.6 to 4.0.

## Revendications

1. Procédé de production d'un agent protecteur ou fortifiant phytosanitaire pour la lutte contre des maladies des plantes dues à des bactéries, en particulier contre le feu bactérien,
**caractérisé par le fait**
**qu'**il est ajouté des structures de type champignon aptes à se multiplier à un environnement acide pour le traitement des plantes et qu'il est ajouté à l'environnement de l'hydrogéno-orthophosphate disodique ou de l'hydrogénocarbonate de sodium, pour obtenir une valeur de pH de l'ordre de 3,6 à 4,0.

2. Procédé selon la revendication 1, **caractérisé par le fait qu'**il est ajouté, comme structures de type champignon, des cellules de levure et/ou des spores de champignon aptes à se multiplier.

3. Procédé selon au moins l'une des revendications 1 ou 2, **caractérisé par le fait qu'**il est ajouté des blastospores du type aureobasisium pullulans.

4. Procédé selon au moins l'une des revendications 1 à 3, **caractérisé par le fait qu'**il est ajouté des cellules de levure du type metschnikowia pulcherrima.

5. Procédé selon au moins l'une des revendications 1 à 4, **caractérisé par le fait qu'**il est ajouté, comme agent d'acidification, de l'acide citrique.

6. Procédé selon au moins l'une des revendications 1 à 5, **caractérisé par le fait qu'**il est ajouté du lactosérum en poudre à l'environnement.

7. Procédé selon au moins l'une des revendications 1 à 6, **caractérisé par le fait qu'**il est ajute des blastospores ou des cellules de levure, ainsi que de l'acide citrique et du lactosérum en poudre.

8. Procédé selon au moins l'une des revendications 1 à 7, **caractérisé par le fait qu'**il est utilisé, comme structures de type champignons aptes à se multiplier, des spores, des conidies et des cellules de levure bourgeonnantes de champignons filamenteux et des champignons de levure.

9. Agent protecteur ou fortifiant phytosanitaires pour la lutte contre des maladies des plantes dues à des bactéries, en particulier contre le feu bactérien, **caractérisé par le fait que** la préparation contient un environnement acide et des structures de type champignon aptes à se multiplier et qu'il est ajouté à l'environnement de l'hydrogénophosphate disodique ou de l'hydrogénocarbonate de sodium, pour qu'une valeur de pH soit maintenue de l'ordre de 3 à 4,0.

10. Agent protecteur ou fortifiant phytosanitaires pour la lutte contre des maladies des plantes dues à des bactéries, en particulier contre le feu bactérien, **caractérisé par le fait que** 1 kg de préparation contient:
environ 2x10¹¹ à 1x10¹³, en particulier 2x10¹² blastospores de type aureobasisium pullulans,
environ 2x10¹¹ à 1x10¹³, en particulier 3x10¹² de cellules de levure du type metschnikowia pulcherrima,
100 g à 400 g, en particulier 300 g d'acide citrique,
50 g à 250 g, en particulier 150 g d'hydrogéno-orthophosphate disodique,
100 g à 500 g, en particulier 400 g de lactosérum en poudre.

11. Utilisation d'agents protecteurs ou fortifiants phytosanitaires pour la lutte contre des maladies des plantes dues à des bactéries, en particulier contre le feu bactérien, qui contiennent des structures de type champignon aptes à se multiplier dans un environnement acide et à l'environnement desquels est ajouté de l'hydrogéno-orthophosphate disodique ou de l'hydrogénocarbonate de sodium pour que soit maintenue une valeur de pH de l'ordre de 3,6 à 4,0.

12. Utilisation selon la revendication 11, **caractérisée par le fait qu'**il est utilisé, comme structures de type champignon aptes se multiplier, des blastospores du type aureobasisium pullulans et/ou des cellules de levure du type metschnikowia pulcherrima.

13. Utilisation selon la revendication 11 ou 12, **caractérisée par le fait qu'**il est utilisé des agents d'acidification de type organique ou anorganique, en particulier de l'acide citrique.

14. Utilisation selon au moins l'une des revendications 11 à 13 pour la lutte contre le feu bactérien (erwinia amylovora) par pulvérisation des fleurs de plantes par un mélange de structures de type champignon aptes se multiplier et d'acides dont le bouillon de pulvérisation a une valeur de pH de l'ordre de 3,6 à 4,0.

15. Utilisation selon au moins l'une des revendications 11 à 14, **caractérisée par** une lutte contre le feu bactérien (erwinia amylovora) en pulvérisant des fleurs de plantes par des blastospores du type aureobasisium pullulans et/ou des cellules de levure du type metschnikowia pulcherrima en mélange avec des acides, le mélange ou le bouillon de pulvérisation étant maintenu à une valeur de pH de l'ordre de 3,6 à 4,0.

16. Utilisation selon au moins l'une des revendications 11 à 15, **caractérisée par le fait que** pour la lutte contre le feu bactérien (erwinia amylovora) les fleurs des plantes sont pulvérisées par des blastospores du type aureobasisium pullulans et/ou des cellules de levure du type metschnikowia pulcherrima en mélange avec des acides organiques dont la valeur de pH est de l'ordre de 3,6 à 4,0.
